# EUROPÄISCHE PATENTSCHRIFT

(11) **EP 1 743 752 B1**
(45) Veröffentlichungstag und Bekanntmachung des Hinweises auf die Patenterteilung: **24.10.2007**
(21) Anmeldenummer: 06012927.7
(22) Anmeldetag: 23.06.2006
(51) Int. Cl.: B27C 5/02, B27C 9/04, B27G 3/00, B23Q 11/00, B23D 45/02, B23D 59/00, B26D 7/18

(54) **Vorrichtung zum Zuschneiden und sonstigen Bearbeiten von Platten**
Apparatus for cutting and machining plates
Dispositif de découpe et usinage de plaques

(30) Priorität: 15.07.2005 AT 4822005 U
(43) Veröffentlichungstag der Anmeldung: 17.01.2007
(73) Patentinhaber: Magacon Technologies GmbH, 6425 Haiming (AT)
(72) Erfinder: Gangl, Josef, 8343 Trautmannsdorf (AT); Gangl, Franz, 6020 Innsbruck (AT)
(74) Vertreter: Hofmann, Ralf U.

(56) Entgegenhaltungen:
- DE-A1- 4 332 630
- DE-A1- 19 527 727
- US-A- 4 945 958

## Beschreibung

Die Erfindung betrifft eine Vorrichtung zum Zuschneiden und sonstigen Bearbeiten von Platten, z.B. Gipskarton-, Karton-, Holz-, Span-, Faser-, Hartfaser-, Weichfaser-, Zementfaser- oder Hartgipsplatten od.dgl., wobei ein Auflagetisch zum Auflegen der Platten und eine parallel zum Auflagetisch in einer X- und einer Y-Achse verschiebbare Halterung zur höhenverstellbaren Anordnung der für das Zuschneiden oder Bearbeiten einsetzbaren Schneid-, Fräs-, Bohreinrichtungen od.dgl. vorgesehen sind, wobei die Schneid-, Fräs-, Bohreinrichtungen od.dgl. gegenüber der Halterung höhenverstellbar und feststellbar sind (siehe z.B. DE-A-4332630).

Vorrichtungen zum Zuschneiden und sonstigen Bearbeiten von Platten jeder Art sind bereits in vielen Ausführungsvarianten bekannt geworden, mit welchen viele Möglichkeiten gegeben sind. Gerade dort, wo bei der Bearbeitung ganz feiner Staub entsteht, ergeben sich aber besondere Probleme, die bisher keiner Lösung zugeführt werden konnten.

Die vorliegende Erfindung hat sich daher zur Aufgabe gestellt, eine Vorrichtung der eingangs genannten Art zu schaffen, bei welcher die Absaugung von Staub und Schmutz optimal geregelt werden soll.

Erfindungsgemäß gelingt dies dadurch, dass die Halterung eine an eine Absauganlage für Staub und Schmutz anschließbare Kammer aufweist, dass an zwei einander gegenüberliegenden Begrenzungen der Halterung oder gegebenenfalls der Kammer selbst Schneid-, Fräs-, Bohreinrichtungen od.dgl. lösbar, jedoch verriegelbar befestigbar sind, dass den Schneid-, Fräs-, Bohreinrichtungen od.dgl. vom Bereich des Werkzeugeingriffes derselben ausgehende Kanäle zugeordnet sind, welche in der an der Halterung verriegelten Anordnung der Schneid-, Fräs-, Bohreinrichtungen od.dgl. in die an die Absauganlage anschließbare Kammer münden.

Durch diese Maßnahmen wird erreicht, dass der Staub und der Schmutz unmittelbar an der Bearbeitungsstelle beim Schneiden, Fräsen oder Bohren abgesaugt wird, also in einem relativ kleinen Bereich eine effektive Absaugung erfolgt. Außerdem ist gewährleistet, dass jeder Schneideinrichtung, jeder Fräseinrichtung oder jeder Bohreinrichtung unmittelbar und einzeln eine Absaugung zugeordnet ist, so dass also nur dort eine Absaugung erfolgt, wo wirklich Staub und Schmutz entsteht. Es ist damit eine optimale Möglichkeit geschaffen worden, auch beim Bearbeiten von Platten den Staub und Schmutz dort aufzufangen, wo er entsteht, so dass praktisch aus einer Baustelle ein sauberer Arbeitsplatz entsteht.

Weiter wird vorgeschlagen, dass die Kammer mit Öffnungen, welche durch Kappen, Schieber od.dgl. verschließbar sind, versehen ist, wobei die Kappen, Schieber od.dgl. beim Ansetzen der Schneid-, Fräs-, Bohreinrichtungen od.dgl. an die Halterung und somit beim Eingreifen der Kanäle in die Kammer die Öffnungen freigeben. Damit ist gewährleistet, dass nur jene in die Kammer führende Öffnung, in deren Bereich eine Schneid-, Fräs-, Bohreinrichtungen od.dgl. verriegelt ist, auch offen ist und über den entsprechenden Kanal eine Absaugung von der Einsatzstelle dieser Schneid-, Fräs-, Bohreinrichtungen od.dgl. her erfolgt. Es gibt daher auch nicht eine Fehlabsaugung an einer Stelle, wo gerade keine Absaugung benötigt wird.

Eine einfache Konstruktion ist dann gegeben, wenn von der Kammer in der Halterung eine flexible Verbindung über einen Schlauch zu einer seitlich außerhalb des Auflagetisches angeordneten und mit der Halterung in Längsrichtung des Auflagetisches verschiebbaren Maschinenteil geführt ist, welcher wiederum eine Ausbildung zum Anstecken einer Absauganlage aufweist. Es ist somit immer eine optimale Absaugung möglich unabhängig von der X-Y-Stellung der Halterung zur Aufnahme der Schneid-, Fräs-, Bohreinrichtungen od.dgl. Der Maschinenteil stellt also eine gute Verbindung zwischen dem von der Halterung kommenden Schlauch und der Absauganlage dar.

Eine vorteilhafte Ausgestaltung liegt dann vor, wenn die einander gegenüberliegenden Begrenzungen der Halterung oder gegebenenfalls der Kammer selbst mit Verriegelungseinrichtungen zum Festlegen der Schneid-, Fräs-, Bohreinrichtungen od.dgl. und ferner mit Anschlusselementen für die Stromzuführung zu denselben versehen sind.
Es ist dadurch gewährleistet, dass nur bei richtig verriegelten Schneid-, Fräs-, Bohreinrichtungen od.dgl. diese auch in Betrieb genommen werden können. In dieser Position der exakten Verriegelung ist dann auch die Verbindung zwischen dem Kanal an der Schneid-, Fräs-, Bohreinrichtungen od.dgl. und der Kammer gesichert.

Eine weitere günstige Ausbildung ist dann vorhanden, wenn der Schlauch in eine nach oben hin offene Profilrinne einer Führungsschiene zur verfahrbaren Anordnung der Halterung eingelegt ist und von der dem Maschinenteil abgewandten Seite an die Kammer angeschlossen ist, so dass der Schlauch mit einer Umlenkung über die ganze Strecke der Verschiebemöglichkeit der Halterung an der Führungsschiene mitgeführt ist. Daher ist in jeder Stellung der Halterung in Richtung der X- oder der Y-Achse eine optimale Verbindung zwischen Halterung, Maschinenteil und Absauganlage über den Schlauch und somit stets eine gute Absaugung gewährleistet.

Weitere besondere Merkmale und Vorteile der Erfindung werden in der nachstehenden Beschreibung anhand der Zeichnungen noch näher erläutert. Es zeigen:
Fig.1 eine Schrägsicht der erfindungsgemäßen Vorrichtung;
Fig.2 eine Ansicht der Vorrichtung von vorne;
Fig.3 eine Ansicht eines Teiles der Vorrichtung von vorne gesehen, jedoch gegenüber Fig. 2 vergrößert dargestellt;
Fig.4 eine Ansicht eines Teiles der Vorrichtung von der Seite gesehen;
Fig.5 eine Ansicht einer Begrenzung der Halterung;
Fig.6 eine Schrägsicht der Vorrichtung im Bereich der Halterung, wobei das Ansetzen einer Fräs- oder Bohreinrichtung ersichtlich ist.

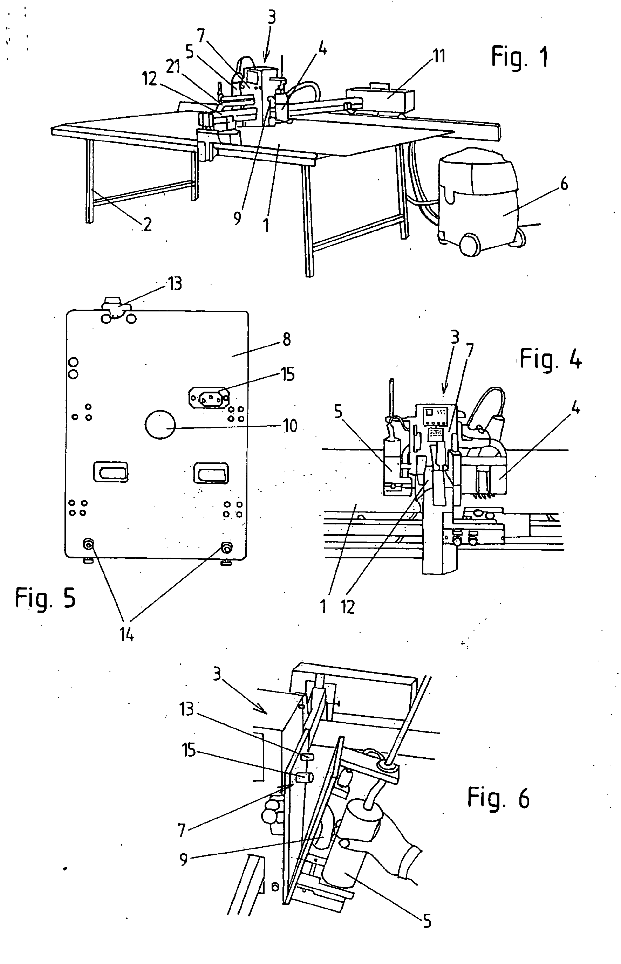

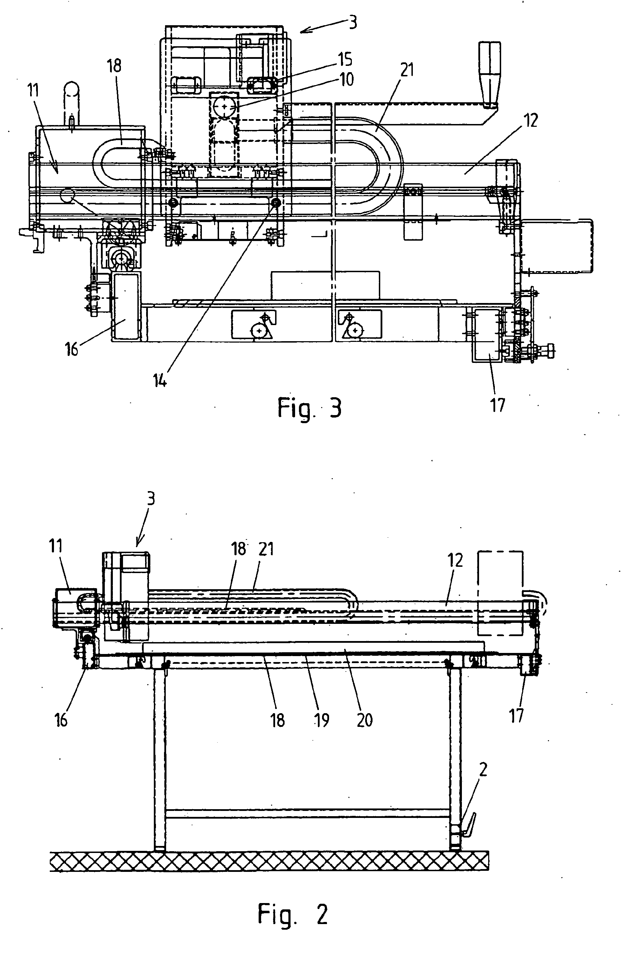

Eine Vorrichtung zum Zuschneiden und sonstigen Bearbeiten von Platten, z.B. Gipskarton-, Karton-, Holz-, Span-, Faser-, Hartfaser-, Weichfaser-, Zementfaser- oder Hartgipsplatten od.dgl. ist in der Schrägsicht aus Fig.1 ersichtlich. Es ist ein Auflagetisch 1 mit einem Untergestell 2 zum Auflegen der Platten vorhanden. Ferner ist eine parallel zum Auflagetisch 1 in einer X- und einer Y-Achse verschiebbare Halterung 3 zur höhenverstellbaren Anordnung der für das Zuschneiden oder Bearbeiten einsetzbaren Schneid- 4, Fräs- 5, Bohreinrichtungen od.dgl. vorgesehen. Die Schneid-, Fräs-, Bohreinrichtungen 4,5 od.dgl. sind gegenüber der Halterung 3 höhenverstellbar und feststellbar, um dadurch alle Möglichkeiten für das Zuschneiden oder Fräsen oder sonstige Bearbeiten der Platten offen zu halten.

Die Halterung 3 weist eine an eine Absauganlage 6 anschließbare Kammer 7 auf. An zwei einander gegenüberliegenden Begrenzungen 8 der Halterung 3 oder gegebenenfalls der Kammer 7 selbst sind Schneid-, Fräs-, Bohreinrichtungen 4,5 od.dgl. lösbar, jedoch verriegelbar befestigbar. Dabei sind den Schneid-, Fräs-, Bohreinrichtungen 4,5 od.dgl. vom Bereich des Werkzeugeingriffes derselben ausgehende Kanäle 9 zugeordnet, welche in der an der Halterung 3 verriegelten Anordnung der Schneid-, Fräs-, Bohreinrichtungen 4,5 od.dgl. in die an die Absauganlage 6 anschließbare Kammer 7 münden. Die Absauganlage kann dabei ein Industriestaubsauger sein, wie dies in Fig.1 gezeigt ist.

Die Kammer ist 7 mit Öffnungen10 versehen, welche über Kappen, Schieber od.dgl. verschließbar sind. Diese Kappen, Schieber od.dgl. geben beim Ansetzen der Schneid-, Fräs-, Bohreinrichtungen 4,5 od.dgl. an die Halterung 3 und somit beim Eingreifen der Kanäle 9 in die Kammer 7 die Öffnungen 10 frei. Es kann dabei auch vorgesehen sein, dass auch die Absaugung nur dann in Betrieb gesetzt wird, wenn eine im Einsatz befindliche Schneid-, Fräs-, Bohreinrichtungen od.dgl. eingeschaltet ist und somit Staub und Schmutz erzeugt wird.

Von der Kammer 7 ist in der Halterung 3 eine flexible Verbindung über einen Schlauch 21 zu einer seitlich außerhalb des Auflagetisches 1 angeordneten und mit der Halterung 3 in Längsrichtung des Auflagetisches 1 verschiebbaren Maschinenteil 11 geführt. In diesem Maschinenteil 11 ist dann wiederum eine Ausbildung zum Anstecken einer Absauganlage 6 vorhanden. Der Schlauch 21 ist vorteilhaft in eine nach oben hin offene Profilrinne einer Führungsschiene 12 zur verfahrbaren Anordnung der Halterung 3 eingelegt und von der dem Maschinenteil 11 abgewandten Seite an die Kammer 7 bzw. die Halterung 3 angeschlossen. Der Schlauch 21 ist dadurch mit einer Umlenkung über die ganze Strecke der Verschiebemöglichkeit der Halterung 3 an der Führungsschiene 12 mitgeführt.

Die einander gegenüberliegenden Begrenzungen 8 der Halterung 3 oder gegebenenfalls der Kammer 7 selbst sind mit Verriegelungseinrichtungen13 und Einrastelementen 14 zum Festlegen der Schneid-, Fräs-, Bohreinrichtungen 4,5 od.dgl. und ferner mit Anschlusselementen 15 für die Stromzuführung zu denselben versehen.

Die Halterung kann über seitliche Schienen 16, 17 und die den Auflagetisch übergreifende Profilschiene praktisch in alle X- und Y-Richtungen verschoben werden. Die Höheneinstellung der einzelnen Schneid-, Fräs-, Bohreinrichtungen 4,5 od.dgl. wird an der Aufhängung derselben selbst vorgenommen. Für die Durchführung von geraden Schnitten oder auch für entsprechende Fräsarbeiten kann die Halterung durch eine Magnetfixierung in einer voreinstellbaren X- und/oder Y-Position festgelegt werden, um damit exakt geradlinige Schnitte oder bearbeitete Rillen oder Ränder zu erreichen. Der Auflagetisch 1 ist beispielsweise mit einer Sperrholzplatte 18 abgedeckt, wobei z.B. bei einer Gipskartonplatte 20 der Karton 19 nach unten direkt auf der Sperrholzplatte 18 aufliegt.

Auf die gleiche Weise wie der Schlauch 21 ist auch der Stromanschluss für den Bereich der Halterung über eine flexible Zuleitung 18 bewerkstelligt.

Im Rahmen der Erfindung kann aber auch nur eine Schneid-, Fräs-, Bohreinrichtung 4,5 od.dgl. angeordnet sein. Es ist auch denkbar, lediglich eine Möglichkeit zum Anbringen einer Schneid-, Fräs-, Bohreinrichtung 4,5 od.dgl. zu vorzusehen.

## Patentansprüche

1. Vorrichtung zum Zuschneiden und sonstigen Bearbeiten von Platten, z.B. Gipskarton-, Karton-, Holz-, Span-, Faser-, Hartfaser-, Weichfaser-, Zementfaser- oder Hartgipsplatten od.dgl., wobei ein Auflagetisch zum Auflegen der Platten und eine parallel zum Auflagetisch in einer X- und einer Y-Achse verschiebbare Halterung (3) zur hohenverstellbaren Anordnung der für das Zuschneiden oder Bearbeiten einsetzbaren Schneid-, Fräs-, Bohreinrichtungen od.dgl. vorgesehen sind, wobei die Schneid-, Fräs-, Bohreinrichtungen od.dgl. gegenüber der Halterung höhenverstellbar und feststellbar sind, **dadurch gekennzeichnet, dass** die Halterung (3) eine an eine Absauganlage (6) für Staub und Schmutz anschließbare Kammer (7) aufweist, dass an zwei einander gegenüberliegenden Begrenzungen (8) der Halterung (3) oder gegebenenfalls der Kammer (7) selbst Schneid-, Fräs-, Bohreinrichtungen (4,5) od.dgl. lösbar, jedoch verriegelbar befestigbar sind, dass den Schneid-, Fräs-, Bohreinrichtungen (4,5) od.dgl. vom Bereich des Werkzeugeingriffes derselben ausgehende Kanäle (9) zugeordnet sind, welche in der an der Halterung (3) verriegelten Anordnung der Schneid-, Fräs-, Bohreinrichtungen (4,5) od.dgl. in die an die Absauganlage (6) anschließbare Kammer (7) münden.

2. Vorrichtung nach Anspruch 1, **dadurch gekennzeichnet, dass** die Kammer (7) mit Öffnungen (10), welche durch Kappen, Schieber od.dgl. verschließbar sind, versehen ist, wobei die Kappen, Schieber od.dgl. beim Ansetzen der Schneid-, Fräs-, Bohreinrichtungen (4,5) od.dgl. an die Halterung (3) und somit beim Eingreifen der Kanäle (9) in die Kammer (7) die Öffnungen (10) freigeben.

3. Vorrichtung nach Anspruch 1, **dadurch gekennzeichnet, dass** von der Kammer (7) in der Halterung (3) eine flexible Verbindung über einen Schlauch (21) zu einer seitlich außerhalb des Auflagetisches (1) angeordneten und mit der Halterung (3) in Längsrichtung des Auflagetisches (1) verschiebbaren Maschinenteil (11) geführt ist, welcher wiederum eine Ausbildung zum Anstecken einer Absauganlage (6) aufweist.

4. Vorrichtung nach den Ansprüchen 1 bis 3, **dadurch gekennzeichnet, dass** die einander gegenüberliegenden Begrenzungen (8) der Halterung (3) oder gegebenenfalls der Kammer (7) selbst mit Verriegelungseinrichtungen (13) zum Festlegen der Schneid-, Fräs-, Bohreinrichtungen (4,5) od.dgl. und ferner mit Anschlusselementen (15) für die Stromzuführung zu denselben versehen sind.

5. Vorrichtung nach Anspruch 3, **dadurch gekennzeichnet, dass** der Schlauch (21) in eine nach oben hin offene Profilrinne einer Führungsschiene (12) zur verfahrbaren Anordnung der Halterung (3) eingelegt ist und von der dem Maschinenteil (11) abgewandten Seite an die Kammer (7) angeschlossen ist, so dass der Schlauch (21) mit einer Umlenkung über die ganze Strecke der Verschiebemöglichkeit der Halterung (3) an der Führungsschiene (12) mitgeführt ist.

## Claims

1. An apparatus for trimming and otherwise machining boards, for example plasterboard, cardboard, timber planks, chipboard, fibreboard, hardboard, soft fibreboard, cement fibreboard or hard plasterboard or the like, wherein a feed table is provided for feeding the boards and a holder (3), which is displaceable parallel to the feed table on an X-axis and a Y-axis, is provided for the vertically adjustable arrangement of the cutting, milling, drilling devices or the like to be used for the trimming or machining operations, wherein the cutting, milling, drilling devices or the like can be vertically adjusted and located relative to the holder, **characterised in that** the holder (3) has chamber (7) which can be connected to a suction unit (6) for dust and dirt, **in that** cutting, milling, drilling devices (4,5) or the like can be fastened in a releasable but lockable manner to two mutually opposed boundaries (8) of the holder (3) or optionally of the chamber (7) itself, **in that** the cutting, milling, drilling devices (4,5) or the like are associated with ducts (9) which extend from the region of the tool engagement thereof and which in the locked arrangement of the cutting, milling, drilling devices (4,5) or the like on the holder (3) open into the chamber (7) which can be connected to the suction unit (6).

2. An apparatus according to Claim 1, **characterised in that** the chamber (7) is provided with openings (10) which can be closed by caps, slide members or the like, wherein the caps, slide members or the like release the openings (10) when the cutting, milling, drilling devices (4,5) or the like are attached to the holder (3) and thus when the ducts (9) engage in the chamber (7).

3. An apparatus according to Claim 1, **characterised in that** a flexible connection is directed from the chamber (7) in the holder (3) via a hose (21) to a machine part (11) which is arranged laterally outside the feed table (1) and which is displaceable with the holder (3) in the longitudinal direction of the feed table (1), said machine part (11) having in turn a formation for attaching a suction unit (6).

4. An apparatus according to Claims 1 to 3, **characterised in that** the mutually opposed boundaries (8) of the holder (3) or optionally of the chamber (7) itself are provided with locking means (13) for locating the cutting, milling, drilling devices (4,5) or the like and also with connecting elements (15) for the power supply thereto.

5. An apparatus according to Claim 3, **characterised in that** the hose (21) is inserted in an upwardly open profile channel of a guide rail (12) for the traversable mounting of the holder (3) and is connected to the chamber (7) from the side remote from the machine part (11) so that with a change in direction the hose (21) is guided therewith over the full distance of the possible displacement of the holder (3) on the guide rail (12).

## Revendications

1. Dispositif pour découper et autres usinages de plaques, par exemple des plaques de carton-plâtre, de carton, de bois, d'agglomérés, de fibres, de fibres dures, de fibres souples, de fibres de ciment ou de plaques de plâtre dur ou analogues, comportant un plateau pour recevoir la plaque et un support (3) coulissant dans l'axe X et dans l'axe Y parallèlement au plateau, pour une installation réglable en hauteur des dispositifs de découpe, de fraisage, de perçage ou analogues, servant à la découpe ou à l'usinage,
les installations de coupe, de fraisage et de perçage ou analogues pouvant être réglées en hauteur par rapport au support et être bloquées,
**caractérisé en ce que**
le support (3) comporte une installation d'aspiration (6) pour la poussière et la saleté, reliée à une chambre (7),
deux limitations (8) opposées l'une à l'autre du support (3) ou le cas échéant de la chambre (7) elle-même, comportent de manière amovible les installations de découpe, de fraisage ou de perçage (4, 5) qui néanmoins peuvent être fixées de manière verrouillée,
les installations de découpe, de fraisage, perçage (4, 5) ou analogues sont associées à des canaux (9) partant de la zone d'action de l'outil de l'installation et qui débouchent dans la chambre (7) reliée à l'installation d'aspiration (8), dans les installations de coupe, de fraisage ou de perçage (4, 5) verrouillées sur le support (3).

2. Dispositif selon la revendication 1,
**caractérisé en ce que**
la chambre (7) comporte des orifices (10) qui peuvent être fermés par des capuchons, tiroirs ou analogues, et lorsqu'on installe les installations de coupe, de fraisage ou de perçage (4, 5) ou analogues, sur la fixation (3), les capuchons, tiroirs ou analogues libèrent, ainsi les ouvertures (10) lorsque les canaux (9) arrivent dans la chambre (7).

3. Dispositif selon la revendication 1,
**caractérisé en ce qu'**
une liaison souple par un tuyau (21) relie la chambre (7) du support (3) à une partie de machine (11) installée latéralement à l'extérieur du plateau (1) et coulissant avec le support (3) dans la direction longitudinale du plateau (1), cette partie de machine ayant un moyen pour raccorder une installation d'aspiration (6).

4. Dispositif selon l'une des revendications 1 à 3,
**caractérisé en ce que**
les limitations (8) du support (3) qui se font face ou le cas échéant la chambre (7) elle-même sont munies d'installations de verrouillage (13) pour fixer des installations de coupe, de fraisage, de perçage (4, 5) ou analogues et en outre des éléments de branchement (15) pour l'alimentation électrique de ces installations.

5. Dispositif selon la revendication 3,
**caractérisé en ce que**
le tuyau (21) est placé dans une goulotte profilée ouverte vers le haut d'un rail de guidage (12) pour le montage coulissant de la fixation (3) et il est raccordé à la chambre (7) par son côté à l'opposé de la partie de machine (11) pour que le tuyau (21) participe au mouvement avec un renvoi sur tout le trajet possible de coulissement du support (3) sur le rail de guidage (12).
